(19) Europäisches Patentamt
European Patent Office
Office européen des brevets

(11) **EP 2 893 814 B1**

(12) **EUROPEAN PATENT SPECIFICATION**

(45) Date of publication and mention
of the grant of the patent:
**21.06.2017 Bulletin 2017/25**

(51) Int Cl.:
*A23D 7/005* (2006.01)       *A23L 9/20* (2016.01)
*A23D 7/01* (2006.01)        *A23D 7/00* (2006.01)

(21) Application number: **13836168.8**

(86) International application number:
**PCT/JP2013/074126**

(22) Date of filing: **06.09.2013**

(87) International publication number:
**WO 2014/038670 (13.03.2014 Gazette 2014/11)**

(54) **FOAMABLE OIL-IN-WATER EMULSIFIED OIL OR FAT COMPOSITION**

SCHÄUMBARE ÖL-IN-WASSER-ZUSAMMENSETZUNG MIT EMULGIERTEM ÖL ODER FETT

COMPOSITION D'HUILE OU DE GRAISSE D'ÉMULSION HUILE DANS EAU POUVANT MOUSSER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2012 JP 2012197819**

(43) Date of publication of application:
**15.07.2015 Bulletin 2015/29**

(73) Proprietor: **Kaneka Corporation
Osaka-shi, Osaka 530-8288 (JP)**

(72) Inventors:
• **TANAKA Tatsushi
Takasago-shi
Hyogo 676-8688 (JP)**
• **ISOBE Toshihide
Takasago-shi
Hyogo 676-8688 (JP)**
• **MIYASHITA Yuji
Takasago-shi
Hyogo 676-8688 (JP)**
• **YASUTAKE Kiichi
Yokohama-shi
Kanagawa 221-0022 (JP)**
• **YOSHIDA Takashi
Yokohama-shi
Kanagawa 221-0022 (JP)**

(74) Representative: **Hoffmann Eitle
Patent- und Rechtsanwälte PartmbB
Arabellastraße 30
81925 München (DE)**

(56) References cited:
EP-A1- 2 486 805        WO-A1-2009/025123
JP-A- H04 325 054       JP-A- H04 325 054
JP-A- 2008 086 268      JP-A- 2008 086 268
JP-A- 2012 055 268

**Description**

Technical Field

The present invention relates to an edible foamable oil-in-water emulsified oil and fat composition such as whipping cream.

Background Art

Foamable oil-in-water emulsified oil and fat compositions such as whipping cream have been produced from milk fat having excellent flavor or a lauric oil and fat such as palm kernel oil and coconut oil having an appropriate melting point and solid fat amount as the main material of oils or fats. However, the lauric oil and fat contains large amounts of saturated fatty acids and thus increases the firmness of a composition with time. In addition, the lauric oil and fat is produced in a small amount, and its price fluctuates greatly. On this account, there is a demand for a whipping cream containing a palm oil and fat such as palm oil, palm stearin, and a palm medium melting point fraction, which are produced in constant amounts and are inexpensive. If containing a large amount of palm oil or a palm medium melting point fraction, the foamable oil-in-water emulsified oil and fat composition unfortunately contains a larger amount of a symmetric POP triglyceride (P is a palmitic acid residue, O is an oleic acid residue, and the same is applied hereinafter), which is slowly crystallized, and thus has poor whipping properties. If containing a palm transesterified oil and fat, the foamable oil-in-water emulsified oil and fat composition contains the POP triglyceride in a smaller amount but contains an asymmetric PPO triglyceride and the like in larger amounts. The addition of the palm transesterified oil and fat thus improves the whipping properties of a whipping cream, but such a whipping cream contains trisaturated triglycerides such as a high-melting PPP triglyceride in larger amounts and consequently has poor melting properties in the mouth. Hence, the palm oils or fats such as palm oil, palm stearin, and a palm medium melting point fraction are limited to be applied to whipping creams.
The foamable oil-in-water emulsified oil and fat composition containing palm oils or fats is exemplified by an oil and fat for cream mainly containing S2O triglycerides (S is a saturated fatty acid residue, and the same is applied hereinafter) (Patent Document 1), an oil and fat composition for a foamable oil-in-water emulsified fat mainly containing triglycerides with a total carbon number of 50 and 52 (Patent Document 2), and a foamable oil-in-water emulsified oil and fat composition containing 60% by weight or more of SUS (U is an unsaturated fatty acid residue, and the same is applied hereinafter) in an oil and fat (Patent Document 3). Patent Document 1 exemplifies an oil and fat containing highly concentrated S2O triglycerides. Such an S2O triglyceride-containing oil and fat has good whipping properties and melting properties in the mouth. However, the production of the S2O triglyceride-containing oil and fat necessitates two-step fractionation of a palm oil and fat to give a hard fraction, and the amount of the hard fraction is unfortunately small. On this account, the S2O triglyceride-containing oil and fat is comparatively expensive. Patent Document 2 and Patent Document 3 disclose examples using oils or fats containing SUS triglycerides, such as palm oil and a palm medium melting point fraction. However, such an oil and fat contains the SUS triglycerides in large amounts, and a resulting cream is readily solidified. Hence, the oils or fats cannot be substituted for the lauric oils or fats.

Citation List

Patent Literatures

Patent Document 1: JP-A No. 2008-86268
Patent Document 2: JP-A No. 2002-17256
Patent Document 3: JP-A No. 2006-223176

Summary of Invention

Technical Problem

An object of the present invention is to provide an inexpensive foamable oil-in-water emulsified oil and fat composition that mainly contains a palm oil and fat, is unlikely to be solidified, and has good melting properties in the mouth.

Solution to Problem

As a result of intensive studies for solving the problems, the inventors of the present invention have found that an inexpensive foamable oil-in-water emulsified oil and fat composition that is unlikely to be solidified and has good melting properties in the mouth can be obtained by adjusting the formulation of triglycerides in oils or fats contained in the foamable oil-in-water emulsified oil and fat composition to a particular range and by adjusting the amount of solid fats in the oils or fats to a particular range, and have completed the present invention.

Namely, the present invention relates to a foamable oil-in-water emulsified oil and fat composition including an oil phase (A) containing an oil and fat component (a). The oil and fat component (a) at least contains an S2U triglyceride ($a_1$) having two "saturated fatty acid residues with a carbon number of 16 or more and 22 or less" and one "unsaturated fatty acid residue with a carbon number of 16 or more and 22 or less", an SU2 triglyceride ($a_2$) having one "saturated fatty acid residue with a carbon number of 16 or more and 22 or less" and two "unsaturated fatty acid residues with a carbon number of 16 or more and 22 or less", and a trisaturated triglyceride ($a_3$) having three saturated fatty acid residues. The triglyceride ($a_1$) is composed of an SSU triglyceride having the saturated fatty acid residues at the 1- and 2-positions or the 2- and 3-positions and of an SUS triglyceride having the saturated fatty acid residues at the 1- and 3-positions, and the mass ratio of the SSU triglyceride to the SUS triglyceride is 1.0 or more. The triglyceride ($a_3$) includes an SSS triglyceride ($a_3'$) having three "saturated fatty acid residues with a carbon number of 16 or more and 22 or less", the oil and fat component (a) contains the triglyceride ($a_1$) in a mass ratio of 7% by mass or more and 55% by mass or less, the oil and fat component (a) contains the triglyceride ($a_3$) and the triglyceride ($a_1$) in a total mass ratio of 25% by mass or more and 80% by mass or less, and the oil and fat component (a) contains the triglyceride ($a_3'$) in a mass ratio of 0.5% by mass or more and 5% by mass or less. The mass ratio of the triglyceride ($a_1$) to the triglyceride ($a_2$) is 0.8 or more and 2.2 or less, and the mass ratio of the triglyceride ($a_1$) to the triglyceride ($a_3'$) is 3.8 or more. The mass ratio of a palmitic acid residue to all the "saturated fatty acid residues with a carbon number of 16 or more and 22 or less" is 0.45 or more in the oil and fat component (a). The oil and fat component (a) contains a solid fat in a mass ratio of 40% by mass or more at 10°C, 5% by mass or less at 35°C, and 1% by mass or less at 40°C. In a preferred aspect of the foamable oil-in-water emulsified oil and fat composition, the oil and fat component (a) further contains an UUU triglyceride ($a_4$) having three unsaturated fatty acid residues, and the oil and fat component (a) contains the triglyceride ($a_4$) in a mass ratio of 4% by mass or more and 30% by mass or less. In a more preferred aspect of the foamable oil-in-water emulsified oil and fat composition, the oil phase (A) contains an oil and fat ($\alpha$) in which the whole oil and fat contain the triglyceride ($a_1$) in a mass ratio of 30% by mass or more and 55% by mass or less, the mass ratio of the triglyceride ($a_1$) to the triglyceride ($a_2$) is 0.8 or more and 2.2 or less, the mass ratio of the triglyceride ($a_1$) to the triglyceride ($a_3'$) is 5.0 or more, the mass ratio of the SSU triglyceride to the SUS triglyceride is 1.0 or more, and the mass ratio of a palmitic acid residue to all the saturated fatty acid residues with a carbon number of 16 or more and 22 or less is 0.65 or more, in an amount of 20% by mass or more and 100% by mass or less. In an even more preferred aspect of the foamable oil-in-water emulsified oil and fat composition, the oil phase (A) contains the oil and fat ($\alpha$) in an amount of 50% by mass or more and 80% by mass or less. In a particularly preferred aspect of the foamable oil-in-water emulsified oil and fat composition, the oil and fat ($\alpha$) is a fractionated liquid of a transesterified oil of a palm oil and fat and has an iodine value of 38 or more and 62 or less. In a still preferred aspect of the foamable oil-in-water emulsified oil and fat composition, the oil phase (A) further contains at least one oil and fat ($\beta$) of a lauric oil and fat and a milk fat in an amount of 20% by mass or more and 50% by mass or less. In another preferred aspect of the foamable oil-in-water emulsified oil and fat composition, the oil phase (A) is contained in a mass ratio of 20% by mass or more and 50% by mass or less, and an aqueous phase (B) is contained in a mass ratio of 50% by mass or more and 80% by mass or less. In a more preferred aspect of the foamable oil-in-water emulsified oil and fat composition, the oil phase (A) contains the oil and fat component (a) in a mass ratio of 85% by mass or more and 100% by mass or less.

A second aspect of the present invention relates to a whipped cream produced by using the foamable oil-in-water emulsified oil and fat composition pertaining to the present invention.

Advantageous Effects of Invention

The present invention can provide an inexpensive foamable oil-in-water emulsified oil and fat composition that mainly contains a palm oil and fat, is unlikely to be solidified, and has good melting properties in the mouth.

Description of Embodiments

A foamable oil-in-water emulsified oil and fat composition pertaining to the present invention includes an oil phase (A) and an aqueous phase (B). The oil phase (A) contains an oil and fat component (a). The oil and fat component (a) at least contains predetermined triglycerides ($a_1$), ($a_2$), and ($a_3$). The triglyceride ($a_1$) is an S2U triglyceride having two "saturated fatty acid residues with a carbon number of 16 or more and 22 or less" and one "unsaturated fatty acid residue with a carbon number of 16 or more and 22 or less". The triglyceride $(a_2)$ is an SU2 triglyceride having one "saturated fatty acid residue with a carbon number of 16 or more and 22 or less" and two "unsaturated fatty acid residues with a carbon number of 16 or more and 22 or less". The triglyceride $(a_3)$ is a trisaturated triglyceride having three saturated fatty acid residues with any chain length.

In the present invention, the S2U triglyceride $(a_1)$ is composed of SSU triglycerides having the saturated fatty acid residues at the 1- and 2-positions or the 2- and 3-positions and SUS triglycerides having the saturated fatty acid residues at the 1- and 3-positions. In the triglyceride $(a_1)$, the mass ratio of the SSU triglyceride to the SUS triglyceride (SSU triglyceride/SUS triglyceride) is preferably 1.0 or more. If the mass ratio is 1.0 or more, such a composition can prevent the solidification of a cream. The mass ratio is more preferably 1.5 or more. The mass ratio is preferably 10 or less. This is because, if the mass ratio is 10 or less, such a foamable oil-in-water emulsified oil and fat composition can be produced at a relatively low cost.

In the present invention, the SU2 triglyceride $(a_2)$ is composed of SUU triglycerides and USU triglycerides. The SUU triglyceride is an SU2 triglyceride having the saturated fatty acid residue at the 1-position or the 3-position and having the unsaturated fatty acid residues at the 2- and 3-positions or the 1- and 2-positions. The USU triglyceride is an SU2 triglyceride having the saturated fatty acid residue at the 2-position and having the unsaturated fatty acid residues at the 1- and 3-positions.

In the present invention, the trisaturated triglyceride $(a_3)$ includes an SSS triglyceride $(a_3')$ having three "saturated fatty acid residues with a carbon number of 16 or more and 22 or less".

Each triglyceride can include corresponding optical isomers.

The oil and fat component (a) preferably contains the S2U triglyceride $(a_1)$ in a mass ratio of 7% by mass or more and 55% by mass or less. If the mass ratio is within the range, a lauric oil and fat or a milk fat can sufficiently exert the effect of improving whipping properties, and such a composition can prevent the solidification of a cream during refrigeration storage. The mass ratio is more preferably 17% by mass or more and 50% by mass or less and even more preferably 20% by mass or more and 35% by mass or less.

The oil and fat component (a) preferably contains the trisaturated triglyceride $(a_3)$ and the S2U triglyceride $(a_1)$ in a total mass ratio of 25% by mass or more and 80% by mass or less. If the mass ratio is within the range, such a composition can prevent the solidification of a cream, and allows a cream to be easily whipped and to have good shape retention properties. The mass ratio is more preferably 30% by mass or more and 70% by mass or less and even more preferably 40% by mass or more and 60% by mass or less.

The oil and fat component (a) preferably contains the SSS triglyceride $(a_3')$ in a mass ratio of 0.5% by mass or more and 5% by mass or less. If the mass ratio is within the range, such a composition can prevent the solidification of a cream, and allows a cream to have good melting properties in the mouth. The mass ratio is more preferably 0.5% by mass or more and 3% by mass or less.

The mass ratio of the S2U triglyceride $(a_1)$ to the SU2 triglyceride $(a_2)$ [S2U triglyceride $(a_1)$/SU2 triglyceride $(a_2)$] is preferably 0.8 or more and 2.2 or less. If the mass ratio is within the range, such a composition can prevent the solidification of a cream and can prevent the softening of a cream. The mass ratio is more preferably 0.8 or more and 1.5 or less.

The mass ratio of the S2U triglyceride $(a_1)$ to the SSS triglyceride $(a_3')$ [S2U triglyceride $(a_1)$/SSS triglyceride $(a_3')$] is preferably 3.8 or more. If the mass ratio is 3.8 or more, such a composition can prevent the softening of a cream. The mass ratio is more preferably 5.0 or more and even more preferably 10.0 or more. The mass ratio is preferably 100 or less. This is because, if the mass ratio is 100 or less, such a composition can prevent the solidification of a cream.

The saturated fatty acid residue with a carbon number of 16 or more and 22 or less includes a palmitic acid residue (P). The mass ratio of the palmitic acid residue (P) to all the saturated fatty acid residues with a carbon number of 16 or more and 22 or less (hereinafter also called "P/S") is preferably 0.45 or more. If the mass ratio (P/S) is 0.45 or more, such a composition allows a cream to have good melting properties in the mouth. The mass ratio (P/S) is more preferably 0.65 or more. The mass ratio (P/S) is preferably 0.95 or less. This is because, if the mass ratio (P/S) is 0.95 or less, such a foamable oil-in-water emulsified oil and fat composition can be produced at a relatively low cost.

An additional feature of the foamable oil-in-water emulsified oil and fat composition of the present invention is the mass ratio of a solid fat in the oil and fat component (a). The oil and fat component (a) preferably contains the solid fat in a mass ratio of 40% by mass or more at 10°C. If the mass ratio is 40% by mass or more, such a composition allows a cream to have good shape retention properties. The mass ratio is preferably 80% by mass or less. This is because, if the mass ratio is 80% by mass or less, such a composition can prevent the solidification of a cream. In the foamable oil-in-water emulsified oil and fat composition, the oil and fat component (a) preferably contains the solid fat in a mass ratio of 5% by mass or less at 35°C and 1% by mass or less at 40°C. If these mass ratios satisfy the above values, such a composition allows a cream to have good melting properties in the mouth.

The oil and fat component (a) preferably further contains an UUU triglyceride $(a_4)$ having three unsaturated fatty acid residues. The unsaturated fatty acid in the UUU triglyceride $(a_4)$ may have any chain length. The oil and fat component (a) preferably contains the UUU triglyceride $(a_4)$ in a mass ratio of 4% by mass or more and 30% by mass or less, more preferably 4% by mass or more and 25% by mass or less, even more preferably 4% by mass or more and 20% by mass or less, and particularly preferably 7% by mass or more and 15% by mass or less. If the mass ratio is 4% by mass or more and 30% by mass or less, such a composition allows a whipped cream to have fine texture and to have good shape retention properties.

A simple, inexpensive manner to adjust the triglyceride formulation of the oil and fat component (a) in the oil phase (A) to the above formulation is preferably the addition of a "palm oil and fat (oil and fat $\alpha$) in which the whole oil and fat contain the S2U triglyceride ($a_1$) in a mass ratio of 30% by mass or more and 55% by mass or less, the mass ratio of the S2U triglyceride ($a_1$) to the SU2 triglyceride ($a_2$) [S2U triglyceride ($a_1$)/SU2 triglyceride ($a_2$)] is 0.8 or more and 2.2 or less, the mass ratio of the S2U triglyceride ($a_1$) to the SSS triglyceride ($a_3$') [S2U triglyceride ($a_1$)/SSS triglyceride ($a_3$')] is 5.0 or more, the mass ratio of the SSU triglyceride to the SUS triglyceride (SSU triglyceride/SUS triglyceride) is 1.0 or more in the S2U triglyceride ($a_1$), and the mass ratio (P/S) of the palmitic acid residue (P) to all the saturated fatty acid residues (S) with a carbon number of 16 or more and 22 or less is 0.65 or more" in an amount of 20% by mass or more and 100% by mass or less to the oil phase (A).

The oil phase (A) preferably contains the oil and fat ($\alpha$) in a mass ratio of 50% by mass or more and 100% by mass or less, more preferably 50% by mass or more and 80% by mass or less, and particularly preferably 60% by mass or more and 70% by mass or less. The oil and fat ($\alpha$) is preferably a "liquid prepared by transesterifying a palm oil and fat having an iodine value of 30 or more and 58 or less and then removing solids from the transesterified palm oil and fat". This is because such a liquid has a triglyceride formulation suitable for preparing the foamable oil-in-water emulsified oil and fat composition of the present invention. The palm oil and fat before the transesterification preferably has an iodine value of 35 or more and 55 or less. If a palm oil and fat having an iodine value of 40 or less is used as the raw material, a resulting liquid contains the SSS triglyceride ($a_3$') in an excess amount. In such a case, the primary liquid can be re-fractionated to give a liquid, which has an oil and fat formulation more suitable for the present invention. If a palm oil and fat having an iodine value of less than 30 is used as the raw material, the fractionation efficiency may be deteriorated to increase the cost. If a palm oil and fat having an iodine value of more than 58 is used as the raw material, a liquid after the fractionation may contain the S2U triglyceride ($a_1$) in a smaller amount, and this may reduce the mass ratio of the S2U triglyceride ($a_1$) to the SU2 triglyceride ($a_2$) [S2U triglyceride ($a_1$)/SU2 triglyceride ($a_2$)].

The transesterification method for the palm oil and fat is exemplified by methods commonly applied to edible oils or fats, such as "chemical methods of using alkali catalysts such as sodium methylate" and "enzymes method of using lipases". It is preferred to increase the mass ratio of the SSU triglyceride to the SUS triglyceride (SSU triglyceride/SUS triglyceride) in the S2U triglyceride ($a_1$), and thus the transesterification method is preferably the "chemical methods" or "enzyme methods of using lipases having a certain reactivity to the 2-position of triglycerides, for example, a lipase derived from Thermomyces".

The fractionation method of the liquid is exemplified by methods commonly applied to edible oils or fats. The fractionation is specifically carried out as follows: A palm oil and fat is dissolved in a solvent. Next, the oil and fat solution is gradually cooled so as to give a $\beta$-crystal, where the crystal is precipitated in such a manner that the mass ratio of the S2U triglyceride ($a_1$) to the SSS triglyceride ($a_3$') [S2U triglyceride ($a_1$)/SSS triglyceride ($a_3$')] becomes 3.8 or more in a liquid, and the crystallization temperature is adjusted for the crystallization while the amount of solid fats is observed. The liquid is then isolated. The amount of solid fats during the crystallization is preferably 5% by mass or more and 20% by mass or less. This is because, if the amount of solid fats is within the range, a raw material even having a comparatively low iodine value can yield a liquid containing the SSS triglyceride ($a_3$') in an appropriately adjusted amount, and a raw material even having a comparatively high iodine value can yield a liquid having an appropriately adjusted mass ratio of the S2U triglyceride ($a_1$) to the SU2 triglyceride ($a_2$) [S2U triglyceride ($a_1$)/SU2 triglyceride ($a_2$)]. In addition, the fractionation efficiency can be appropriately maintained, and consequently the increase in production costs can be suppressed. The palm oil and fat after the fractionation preferably has an iodine value of 38 or more and 62 or less. If having an iodine value within the range, the palm oil and fat after the fractionation can give an appropriate mass ratio of the S2U triglyceride ($a_1$) to the SSS triglyceride ($a_3$') [S2U triglyceride ($a_1$)/SSS triglyceride ($a_3$')] and an appropriate mass ratio of the S2U triglyceride ($a_1$) to the SU2 triglyceride ($a_2$) [S2U triglyceride ($a_1$)/SU2 triglyceride ($a_2$)].

A predetermined amount of the fractionated liquid (oil and fat $\alpha$) of an transesterified oil of a palm oil and fat prepared as above is mixed with other oils or fats so as to give an appropriate triglyceride formulation in the oil and fat component (a).

Examples of the other oils or fats include vegetable oils or fats such as rapeseed oil, soybean oil, safflower oil, corn oil, rice oil, cottonseed oil, palm oil and fat, palm kernel oil, and coconut oil; animal oils or fats such as milk fat; and fractionated oils, hardened oils, extremely hardened oils, and transesterified oils of these oils and fats.

The other oils or fats preferably include at least one oil and fat ($\beta$) of a lauric oil and fat and a milk fat. The oil phase (A) preferably contains the oil and fat ($\beta$) in an amount of 20% by mass or more and 50% by mass or less and more preferably 30% by mass or more and 40% by mass or less. Examples of the lauric oil and fat include palm kernel oil, coconut oil, and transesterified oils or fats, fractionated oils or fats, and hardened oils of these oils.

As for the formulation of the whole material oil and fat in the foamable oil-in-water emulsified oil and fat composition of the present invention, for example, the amount of the fractionated liquid (oil and fat α) of a transesterified oil of a palm oil and fat is preferably 20% by mass or more and 100% by mass or less. More preferably, the amount of the oil and fat (α) is 50% by mass or more and 80% by mass or less, and the amount of the oil and fat (β) is 20% by mass or more and 50% by mass or less. Even more preferably, the amount of the oil and fat (α) is 60% by mass or more and 70% by mass or less, and the amount of the oil and fat (β) is 30% by mass or more and 40% by mass or less. If containing a liquid oil and fat such as rapeseed oil, soybean oil, safflower oil, corn oil, rice oil, and cottonseed oil; a palm oil and fat; a transesterified oil and fat, a fractionated oil and fat, or a hardened oil of such an oil; or a similar oil so as to give an amount of 30% by mass or less, the oil and fat component (a) in the present invention can have an appropriate triglyceride formulation without much trial and error.

A mixture of the material oils or fats above may contain additives such as emulsifiers, taste improvers, flavors, and oil-soluble antioxidants, as necessary. In such a case, the additive is added to a mixture of the material oils or fats, and then the mixture of the material oils or fats is stirred and heated until the temperature reaches 50°C or more and 80°C or less to prepare an oil phase (A).

Examples of the emulsifier that can be added to the oil phase (A) include oil-soluble lecithins, glycerol fatty acid esters, polyglycerol fatty acid esters, and sucrose fatty acid esters.

The oil phase (A) preferably contains the oil and fat component (a) in a mass ratio of 85% by mass or more and 100% by mass or less, more preferably 90% by mass or more and 99.9% by mass or less, and even more preferably 95% by mass or more and 99.5% by mass or less. If containing the oil and fat component (a) in a mass ratio of less than 85% by mass, the oil phase (A) contains excess amounts of the additives, which may adversely affect physical properties such as the balance of emulsion stabilities before and after whipping, or flavors.

The aqueous phase is prepared by adding additives such as emulsifiers, thickeners, taste improvers, saccharides, polysaccharides, dairy products, flavors, salts, vitamins, minerals, and other food components to water, as necessary.

Examples of the emulsifier that can be added to the aqueous phase include water-soluble lecithin derivatives, polyglycerol fatty acid esters, and sucrose fatty acid esters. Examples of the thickener include carrageenan, locust bean gum, and guar gum. Examples of the polysaccharides include starch. Examples of the dairy product include butter, skim milk, whey protein, condensed milk, yogurt, cheese, casein protein, and butter milk powder. Examples of the saccharide include sugar, isomerized sugar, and sugar alcohols. Examples of the salts include sodium chloride, phosphates, and polyphosphates.

After the aqueous phase (B) is prepared as above, the aqueous phase (B) is stirred and heated until the temperature reaches 50°C or more and 70°C or less, and the temperature of the aqueous phase (B) is maintained. To the aqueous phase (B) with stirring, the oil phase (A) is added, and the mixture is emulsified.

The foamable oil-in-water emulsified oil and fat composition preferably contains the oil phase (A) in a mass ratio of 20% by mass or more and 50% by mass or less. In other words, the foamable oil-in-water emulsified oil and fat composition preferably contains the aqueous phase (B) in a mass ratio of 50% by mass or more and 80% by mass or less. This is because, if containing the oil phase (A) within the mass ratio, the foamable oil-in-water emulsified oil and fat composition can be satisfactory whipped, and an emulsified state of the foamable oil-in-water emulsified oil and fat composition can be stably maintained.

The emulsion can be subjected to homogenization, sterilization, homogenization, cooling, and aging by a common procedure, yielding the foamable oil-in-water emulsified oil and fat composition of the present invention. The foamable oil-in-water emulsified oil and fat composition can be used to prepare a whipped cream by a common procedure.

Examples

The present invention will next be described in detail with reference to examples and comparative examples. The present invention is not intended to be limited to these examples.

Five oils or fats were prepared prior to the examples, and the preparation examples of the oils or fats will be described first.

(Preparation Example 1)

First, 100 parts by weight of a deacidified palm oil (an iodine value of 52) was heated to 90°C and melted. To the liquefied palm oil, 0.2 parts by weight of sodium methylate was added, and the liquefied palm oil was stirred under reduced pressure for 30 minutes. Next, the palm oil was allowed to cool, and washed with water. To the palm oil, 2 parts by weight of white clay was added, and the palm oil was stirred at 90°C for 30 minutes under reduced pressure to be decolorized, and was further deodorized at 250°C for 1 hour, giving oil and fat 1.

(Preparation Example 2)

The decolorized oil and fat obtained in Preparation Example 1 was heated at 70°C and melted, then the oil and fat was stirred while the temperature was controlled at 37°C, and crystals were precipitated. After the crystallization for 12 hours, the oil and fat was introduced to a compressor and compressed at a pressure of 3 MPa, giving a liquid at a yield of 83%. The liquid was deodorized at 250°C for 1 hour, giving oil and fat 2.

(Preparation Example 3)

An oil and fat was obtained by transesterification and decoloration in the same manner as in Preparation Example 1 except that the palm oil is replaced with a deacidified palm stearin (an iodine value of 35). The oil and fat was then heated at 70°C and melted, and the liquefied oil and fat was stirred while the temperature was controlled at 46°C, and crystals were precipitated. After the crystallization for 12 hours, the oil and fat was introduced to a compressor and compressed at a pressure of 3 MPa, giving a liquid at a yield of 70%. The fractionated liquid obtained as above was further heated at 70°C and melted, then the liquid was stirred while the temperature was controlled at 38°C, and crystals were precipitated. After the crystallization for 12 hours, the liquid was introduced to a compressor and compressed at a pressure of 3 MPa, giving a liquid at a yield of 80%. The liquid was deodorized at 250°C for 1 hour, giving oil and fat 3.

(Preparation Example 4)

An oil and fat was obtained by transesterification and decoloration in the same manner as in Preparation Example 1 except that 100 parts by weight of the palm oil was replaced with "100 parts by weight of a mixed oil and fat containing 50 parts by weight of a deacidified palm oil (an iodine value of 52) and 50 parts by weight of palm stearin (an iodine value of 35)". Next, the oil and fat was heated at 70°C and melted, then the liquefied oil and fat was stirred while the temperature was controlled at 34°C, and crystals were precipitated. After the crystallization for 12 hours, the oil and fat was introduced to a compressor and compressed at a pressure of 3 MPa, giving a liquid at a yield of 70%. The liquid was deodorized at 250°C for 1 hour, giving oil and fat 4.

(Preparation Example 5)

Oil and fat 5 was obtained in the same manner as in Preparation Example 1 except that the palm oil was replaced with a deacidified, extremely hardened palm kernel oil.

Table 1 shows the triglyceride formulations, the isomer ratios (SSU triglyceride/SUS triglyceride), the amounts of palmitic acid, the amounts of saturated fatty acids with a carbon number of 16 or more and 22 or less, and the iodine values of the oils or fats 1 to 5 obtained in Preparation Examples 1 to 5.

The fatty acid formulation was determined by gas chromatography using a methyl esterified sample prepared by methyl esterification in accordance with "Standard Methods for the Analysis of Fats, Oils and Related Materials, interim, 11-2003, the Japan Oil Chemists' Society". The gas chromatograph used was 6890N manufactured by Agilent. The column used was CPS-1 (50 m × 0.25 mm × 0.25 μm) manufactured by QUADREX. The analysis was carried out in the following conditions. The injection temperature was 265°C, the FID detector temperature was 265°C, the oven temperature was constant at 180°C, and the analysis time was 50 minutes. The triglyceride formulation (for example, the amount of SSS triglycerides and the amount of S2U triglycerides) of oils or fats containing no lauric oil and fat was determined by high-performance liquid chromatography. The high-performance liquid chromatograph used was an HPLC apparatus, Alliance, manufactured by Nihon Waters K.K. The detector used was a differential refractive index detector (RI detector). The column used was two reversed phase columns, TSKgel ODS-80Ts (4.6 mm × 25 cm), connected in series. The eluent used was a mixed solvent of acetone and acetonitrile at a volume ratio of 8:2, and was passed through the columns at 0.9 mL/min for the analysis. The triglyceride formulation of oils or fats containing a lauric oil and fat was determined by gas chromatography. The gas chromatograph used was 7890A manufactured by Agilent. The column used was Ultra ALLOY TRG (30 m × 0.25 mm × 0.1 μm) manufactured by Frontier Laboratories Ltd. The analysis was carried out in the following conditions. The injection temperature was 360°C, the FID detector temperature was 360°C, the oven initial temperature was 280°C, the temperature increase rate was 3°C/min, the final temperature was 355°C, and the hold time was 10 minutes. The triglyceride formulation was determined by calculation from analysis values and fatty acid formulations. The isomer ratio of triglycerides was analyzed by using an HPLC equipped with a silver nitrate column. The analysis conditions are described in "Journal of the American Oil Chemists' Society, 68, 289-293 (1991)". The iodine value was analyzed by the method described in "Standard Methods for the Analysis of Fats, Oils and Related Materials, 3.3.3-1996, the Japan Oil Chemists' Society".

[Table 1]

| Table 1 Triglyceride formulations and fatty acid formulations of transesterified oils or fats prepared | | | | | (Unit of amount: % by mass) |
|---|---|---|---|---|---|
| | Preparation Example 1 | Preparation Example 2 | Preparation Example 3 | Preparation Example 4 | Preparation Example 5 |
| | Oil or fat 1 | Oil or fat 2 | Oil or fat 3 | Oil or fat 4 | Oil or fat 5 |
| SSS triglyceride ($a_3$') amount | 9.6 | 2.7 | 2.9 | 1.7 | Oil or fat 5 1.9 |
| S2U triglyceride ($a_1$) amount | 31.8 | 35.7 | 51.6 | 44.0 | 0.0 |
| UUU triglyceride ($a_4$) amount | 11.2 | 11.8 | 5.0 | 7.5 | 0.0 |
| Amount of trisaturated triglyceride ($a_3$) + S2U triglyceride ($a_1$) | 42.3 | 37.8 | 55.1 | 46.1 | 96.9 |
| Mass ratio of S2U triglyceride ($a_1$)/SU2 triglyceride ($a_2$) | 0.96 | 0.96 | 1.82 | 1.27 | - |
| Mass ratio of S2U triglyceride ($a_1$)/SSS triglyceride ($a_3$') | 3.3 | 21.0 | 17.8 | 25.9 | - |
| Mass ratio of SSU triglyceride/SUS triglyceride in ($a_1$) | 2.0 | 2.0 | 2.0 | 2.0 | - |
| Palmitic acid amount (P) | 42.6 | 36.9 | 43.3 | 41.3 | 9.2 |
| C16-C22 saturated fatty acid amount (S) | 47.5 | 41.3 | 47.7 | 45.4 | 31.4 |
| P/S mass ratio | 0.9 | 0.9 | 0.9 | 0.9 | 0.3 |
| Iodine value | 52 | 56 | 48 | 53 | 1 or less |

Examples 1 to 8 <Preparation of foamable oil-in-water emulsified oil and fat compositions>

Foamable oil-in-water emulsified oil and fat compositions pertaining to Examples 1 to 8 were prepared as follows: At least one oil and fat selected from the group consisting of the oil and fat 2, the oil and fat 3, the oil and fat 4, the oil and fat 5, rapeseed oil, a hardened palm kernel oil with a melting point of 36°C, an extremely hardened coconut oil, and milk fat was mixed in accordance with the formulations in Table 2, giving oil and fat mixtures (formulated oils). Table 3 shows the triglyceride formulations and the fatty acid formulations of these formulated oils, and Table 4 shows the solid fat amounts. These formulated oils were melted at a temperature of 65°C or more and 70°C or less. To these formulated oils, lecithin, a glycerol fatty acid ester, and a sucrose fatty acid ester were added to give oil phases. Separately, skim milk and sodium hexametaphosphate were dissolved in water to give aqueous phases. The oil phase was added to the aqueous phase, and the two phases were stirred to be emulsified. The pre-emulsion was treated at a homogenization pressure of 5.0 MPa, and then was sterilized with a direct steam injection sterilizer at 140°C for 4 seconds. The sterilized emulsion was re-treated at a homogenization pressure of 5.0 MPa, then cooled with a plate cooler to 5°C, and placed in a container, giving a foamable oil-in-water emulsified oil and fat composition. The obtained foamable oil-in-water emulsified oil and fat composition was aged at 5°C for 72 hours and was whipped with a Hobart mixer. Liquid stability, whipping time, overrun, texture and gloss, shape retention properties, firmness, and melting properties in the mouth were evaluated in the following procedures. Table 5 shows the results.

<Evaluation method of liquid stability>

The liquid stability was evaluated as follows: In a 100-cc beaker, 60 g of a foamable oil-in-water emulsified oil and fat composition was placed, and was stirred at 120 rpm with a spatula having a diameter of 4 cm. The time until no flowability was observed was determined and evaluated. The evaluation standards were as follows: A: 60 minutes or longer; B: shorter than 60 minutes and not shorter than 30 minutes; C: shorter than 30 minutes and not shorter than 10 minutes; D: shorter than 10 minutes.

<Measurement method of whipping time>

To 500 g of a foamable oil-in-water emulsified oil and fat composition, 50 g of sugar was added. The mixture was whipped until soft peaks were formed with a Hobart mixer at a speed of 2 while the temperature was controlled at 5°C. The whipped cream was then completely whipped, and the time until the cream was completely whipped by hand was determined as the whipping time. The evaluation standards were as follows: A: longer than 8 minutes and not longer than 9 minutes; B: longer than 6 minutes and not longer than 8 minutes, or longer than 9 minutes and not longer than 11 minutes; C: longer than 4 minutes and not longer than 6 minutes, or longer than 11 minutes and not longer than 13 minutes; D: longer than 13 minutes, or not longer than 4 minutes.

<Evaluation method of overrun>

The overrun is the ratio (%) of air contained in a whipped foamable oil-in-water emulsified oil and fat composition, and was calculated in accordance with the following equation.

$$\text{Overrun (\%)} = [(A-B)/B] \times 100$$

[A: the weight (g) of a foamable oil-in-water emulsified oil and fat composition with a certain volume; B: the weight (g) of a whipped foamable oil-in-water emulsified oil and fat composition with a certain volume (the same volume as A)]

<Evaluation method of texture and gloss>

The texture and gloss were evaluated by observing the surface of an artificial flower prepared from a whipped foamable oil-in-water emulsified oil and fat composition with a piping bag. The evaluation standards were as follows: A: smooth and excellent surfaces; B: good surfaces, C: slightly rough surfaces; D: rough and unfavorable surfaces.

<Evaluation method of shape retention properties>

The shape retention properties were evaluated by observing a change in shape of a whipped foamable oil-in-water emulsified oil and fat composition after storage at 15°C for 24 hours. The evaluation standards were as follows: A: the shape is completely retained; B: the shape is slightly lost; C: the shape is lost to some extent; D: the shape is lost.

<Evaluation method of firmness>

First, a whipped foamable oil-in-water emulsified oil and fat composition was placed in a container and flattened. A penetration (mm) of a cone (1 g) into the whipped foamable oil-in-water emulsified oil and fat composition was measured with a micropenetrometer (manufactured by Rigo Co., Ltd.) to determine the hardness. The firmness was evaluated as the value of [(hardness immediately after whipping) - (hardness after storage of the whipped composition at 5°C for 1 day)]. The evaluation standards were as follows: A: more than 0 mm and not more than 4 mm; B: not more than 0 mm, or more than 4 mm and not more than 6 mm; C: more than 6 mm and not more than 7 mm; D: more than 7 mm.

<Evaluation method of melting properties in mouth>

A whipped foamable oil-in-water emulsified oil and fat composition was eaten by ten skilled panelists, and each panelist evaluated the composition on the basis of the following standards. A rank supported by the largest number of panelists was adopted.
A: A composition has excellent melting properties in the mouth and is highly favorable; B: a composition has good melting properties in the mouth and is favorable; C: a composition has slightly poor melting properties in the mouth and is not very favorable, D: a composition has poor melting properties in the mouth and is unfavorable.

(Comparative Examples)

Foamable oil-in-water emulsified oil and fat compositions pertaining to Comparative Examples 1 to 8 were obtained in the same manner as in Examples except that at least one oil and fat selected from the group consisting of the oil and fat 1, the oil and fat 5, rapeseed oil, palm oil, a palm medium melting point fraction, a hardened palm kernel oil with a melting point of 36°C, an extremely hardened coconut oil, and milk fat was mixed in accordance with the formulations in Table 2, giving oil and fat mixtures. The liquid stability, the whipping time, the overrun, the texture and gloss, the shape retention properties, the firmness, and the melting properties in the mouth were evaluated in the same manner as in Examples. Table 5 shows the results.

[Table 2]

Table 2 Formulations of formulated oils and formulations of foamable oil-in-water emulsified oil or fat compositions

(The units of the formulation ratios and the formulations are in terms of part by mass.)

| | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|---|---|---|---|
| Formulation of formulated oil | Oil or fat 1 | 100 | | | | | 25 | | 70 | | | | | | 25 | | |
| | Oil or fat 2 | | 100 | | | | | | | | | | | | | | |
| | Oil or fat 3 | | | 60 | | | | | | | | | | | | | |
| | Oil or fat 4 | | | | 70 | | | 48 | | | | | | | | | |
| | Oil or fat 5 (lauric oil or fat) | | | | | | | | | | | | | | | | |
| | Rapeseed oil | | | | | 65 | 40 | | | | | | | 65 | 40 | | |
| | Palm oil | | | 10 | | 10 | 10 | | | 100 | | 70 | | 10 | 10 | 48 | 70 |
| | Palm medium melting point fraction | | | | | 25 | | | | | 100 | | 70 | 25 | | | |
| | Hardened palm kernel oil with melting point of 36°C (lauric oil or fat) | | | 30 | 30 | | | | | | | 30 | 30 | | | | |
| | Extremely hardened coconut oil (lauric oil or fat) | | | | | | 25 | | 30 | | | | | | 25 | | 30 |
| | Milk fat | | | | | | | 52 | | | | | | | | 52 | |
| Formulation | Formulated oil above | 44.44 | 44.44 | 44.44 | 44.44 | 44.44 | 44.44 | 44.44 | 28.00 | 44.44 | 44.44 | 44.44 | 44.44 | 44.44 | 44.44 | 44.44 | 28.00 |
| Oil phase | Lecithin | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 |
| | Sucrose fatty acid ester (HLB=5) | 0.15 | 0.15 | 0.15 | 0.15 | 0.15 | 0.15 | 0.15 | 0.15 | 0.15 | 0.15 | 0.15 | 0.15 | 0.15 | 0.15 | 0.15 | 0.15 |
| | Glycerol fatty acid ester (saturated fatty acid) | 0.11 | 0.11 | 0.11 | 0.11 | 0.11 | 0.11 | 0.11 | 0.11 | 0.11 | 0.11 | 0.11 | 0.11 | 0.11 | 0.11 | 0.11 | 0.11 |
| | Glycerol fatty acid ester (unsaturated fatty acid) | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 |
| Aqueous phase | Sodium hexametaphosphate | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 |
| | Skim milk | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | Water | 50.92 | 50.92 | 50.92 | 50.92 | 50.92 | 50.92 | 50.92 | 67.36 | 50.92 | 50.92 | 50.92 | 50.92 | 50.92 | 50.92 | 50.92 | 67.36 |
| | Total amount | 100 | 100 | 100 | 100 | 100 | 100 | 100 | 100 | 100 | 100 | 100 | 100 | 100 | 100 | 100 | 100 |

[Table 3]

Table 3 Triglyceride formulations of formulated oils used for foamable oil-in-water emulsified oil or fat compositions                    (Unit of amount: % by mass)

| | | | Example 1 | Example 2 | Example 3 | Example 4 | Example 5 | Example 6 | Example 7 | Example 8 |
|---|---|---|---|---|---|---|---|---|---|---|
| Triglyceride formulation | | SSS triglyceride (a₃') amount | 2.7 | 2.9 | 2.8 | 2.8 | 1.9 | 2.3 | 2.1 | 2.8 |
| | | S2U triglyceride (a₁) amount | 35.7 | 51.6 | 25.4 | 25.4 | 9.1 | 9.0 | 22.6 | 25.4 |
| | | UUU triglyceride (a₁) amount | 11.8 | 5.0 | 8.3 | 8.3 | 11.4 | 11.4 | 7.4 | 8.3 |
| | | Amount of trisaturated triglyceride (a₃) + S2U triglyceride (a₁) | 38.8 | 55.1 | 51.5 | 50.9 | 70.8 | 70.5 | 40.4 | 50.9 |
| | | Mass ratio of S2U triglyceride (a₁)/SU2 triglyceride (a₂) | 1.0 | 1.8 | 1.2 | 1.0 | 0.9 | 0.9 | 1.0 | 1.0 |
| | | Mass ratio of S2U triglyceride (a₁)/SSS triglyceride (a₃') | 13.2 | 17.8 | 14.0 | 9.1 | 4.7 | 3.9 | 10.1 | 9.1 |
| | | Mass ratio of SSU triglyceride/SUS triglyceride in (a₁) | 2.0 | 2.0 | 1.9 | 1.9 | 2.0 | 2.0 | 2.4 | 1.9 |
| Fatty acid formulation | | Palmitic acid amount (P) | 36.9 | 43.3 | 27.8 | 28.4 | 15.7 | 15.7 | 35.7 | 28.4 |
| | | C16-C22 saturated fatty acid amount (S) | 41.3 | 47.7 | 35.6 | 36.6 | 31.5 | 28.9 | 43.3 | 36.6 |
| | | P/S mass ratio | 0.89 | 0.91 | 0.78 | 0.78 | 0.50 | 0.54 | 0.82 | 0.78 |
| | | | Comparative Example 1 | Comparative Example 2 | Comparative Example 3 | Comparative Example 4 | Comparative Example 5 | Comparative Example 6 | Comparative Example 7 | Comparative Example 8 |
| Triglyceride formulation | | SSS triglyceride (a₃') amount | 6.1 | 1.1 | 5.2 | 1.7 | 1.5 | 4.0 | 3.8 | 5.2 |
| | | S2U triglyceride (a₁) amount | 43.1 | 66.5 | 30.6 | 47.0 | 16.7 | 8.0 | 25.1 | 30.6 |
| | | UUU triglyceride amount | 5.7 | 4.3 | 4.0 | 3.0 | 9.5 | 11.2 | 4.1 | 4.0 |
| | | Amount of trisaturated triglyceride (a₃) + S2U triglyceride (a₁) | 49.6 | 67.9 | 58.4 | 71.3 | 78.0 | 71.3 | 45.5 | 58.4 |
| | | Mass ratio of S2U triglyceride (a₁)/SU2 triglyceride (a₂) | 1.17 | 2.96 | 1.18 | 2.98 | 2.46 | 0.85 | 1.12 | 1.18 |
| | | Mass ratio of S2U triglyceride (a₁)/SSS triglyceride (a₃') | 7.1 | 60.5 | 5.9 | 28.1 | 11.0 | 2.0 | 6.7 | 5.9 |
| | | Mass ratio of SSU triglyceride/SUS triglyceride in (a₁) | 0.2 | 0.2 | 0.2 | 0.2 | 0.2 | 2.0 | 0.4 | 0.2 |
| Fatty acid formulation | | Palmitic acid amount (P) | 41.6 | 49.7 | 31.7 | 37.4 | 18.9 | 17.1 | 37.9 | 31.7 |
| | | C16-C22 saturated fatty acid amount (S) | 47.0 | 54.1 | 40.6 | 45.5 | 34.7 | 30.5 | 46.2 | 40.6 |
| | | P/S mass ratio | 0.89 | 0.92 | 0.78 | 0.82 | 0.54 | 0.56 | 0.82 | 0.78 |

[Table 4]

| Table 4 Amounts of solid fats in formulated oils used for foamable oil-in-water emulsified oil or fat compositions | | | | | | | | (% by mass) |
|---|---|---|---|---|---|---|---|---|
| Temperature (°C) | Example 1 | Example 2 | Example 3 | Example 4 | Example 5 | Example 6 | Example 7 | Example 8 |
| 10 | 46.7 | 66.6 | 47.5 | 48.9 | 59.0 | 59.2 | 43.7 | 48.9 |
| 20 | 15.2 | 26.0 | 19.1 | 21.1 | 39.7 | 36.4 | 13.3 | 21.1 |
| 25 | 9.0 | 11.9 | 9.8 | 12.5 | 28.7 | 21.4 | 7.5 | 12.5 |
| 30 | 4.0 | 4.3 | 3.9 | 6.0 | 8.1 | 5.7 | 2.5 | 6.0 |
| 35 | 0.8 | 0.0 | 0.9 | 1.3 | 0.0 | 0.0 | 0.0 | 1.3 |
| 40 | 0.0 | 0.0 | 0.0 | 0.0 | 0.0 | 0.0 | 0.0 | 0.0 |
| Temperature (°C) | Comparative Example 1 | Comparative Example 2 | Comparative Example 3 | Comparative Example 4 | Comparative Example 5 | Comparative Example 6 | Comparative Example 7 | Comparative Example 8 |
| 10 | 55.0 | 72.0 | 47.6 | 69.5 | 60.5 | 61.2 | 30.6 | 50.6 |
| 20 | 29.0 | 45.0 | 19.5 | 22.0 | 38.9 | 39.6 | 13.7 | 20.9 |
| 25 | 17.0 | 18.0 | 14.4 | 10.5 | 25.3 | 25.4 | 10.9 | 15.2 |
| 30 | 10.0 | 3.0 | 9.0 | 4.5 | 7.6 | 8.9 | 5.5 | 9.1 |
| 35 | 5.0 | 0.0 | 4.4 | 0.4 | 0.0 | 2.7 | 1.5 | 4.4 |
| 40 | 0.0 | 0.0 | 0.6 | 0.0 | 0.0 | 0.0 | 0.0 | 0.5 |

[Table 5]

| Table 5 Evaluation of whipping properties and melting properties in mouth of foamable oil-in-water emulsified oil or fat compositions | | | | | | | | |
|---|---|---|---|---|---|---|---|---|
| | Example 1 | Example 2 | Example 3 | Example 4 | Example 5 | Example 6 | Example 7 | Example 8 |
| Evaluation of liquid stability | B | B | A | A | B | A | A | A |
| Whipping time | B | B | A | A | B | B | B | B |
| Overrun (%) | 201 | 206 | 201 | 210 | 201 | 197 | 201 | 210 |
| Evaluation of texture and gloss | B | B | A | A | A | A | B | A |
| Evaluation of shape retention properties | B | B | A | A | B | B | B | A |
| Evaluation of firmness | A | B | A | A | A | B | B | A |
| Evaluation of melting properties in mouth | A | A | A | A | A | A | A | A |
| | Comparative Example 1 | Comparative Example 2 | Comparative Example 3 | Comparative Example 4 | Comparative Example 5 | Comparative Example 6 | Comparative Example 7 | Comparative Example 8 |
| Evaluation of liquid stability | A | - | A | B | B | A | B | A |
| Whipping time | B | Solidified | C | C | C | C | C | B |
| Overrun (%) | 150 | - | 197 | 193 | 195 | 187 | 184 | 185 |
| Evaluation of texture and gloss | C | - | C | C | B | C | C | B |
| Evaluation of shape retention properties | B | - | B | B | B | B | C | B |
| Evaluation of firmness | C | B | B | C | C | B | C | C |
| Evaluation of melting properties in mouth | C | - | C | A | A | B | B | C |

EP 2 893 814 B1

13

Industrial Applicability

The foamable oil-in-water emulsified oil and fat composition of the present invention is widely applicable to foods and is particularly preferably used for whipped creams.

**Claims**

1. A foamable oil-in-water emulsified oil and fat composition comprising an oil phase (A) containing an oil and fat component (a),
the oil and fat component (a) at least containing an S2U triglyceride ($a_1$) having two "saturated fatty acid residues with a carbon number of 16 or more and 22 or less" and one "unsaturated fatty acid residue with a carbon number of 16 or more and 22 or less", an SU2 triglyceride ($a_2$) having one "saturated fatty acid residue with a carbon number of 16 or more and 22 or less" and two "unsaturated fatty acid residues with a carbon number of 16 or more and 22 or less", and a trisaturated triglyceride ($a_3$) having three saturated fatty acid residues,
the triglyceride ($a_1$) being composed of an SSU triglyceride having the saturated fatty acid residues at the 1- and 2-positions or the 2- and 3-positions and of an SUS triglyceride having the saturated fatty acid residues at the 1- and 3-positions, the mass ratio of the SSU triglyceride to the SUS triglyceride being 1.0 or more,
the triglyceride ($a_3$) including an SSS triglyceride ($a_3'$) having three "saturated fatty acid residues with a carbon number of 16 or more and 22 or less",
the oil and fat component (a) containing the triglyceride ($a_1$) in a mass ratio of 7% by mass or more and 55% by mass or less,
the oil and fat component (a) containing the triglyceride ($a_3$) and the triglyceride ($a_1$) in a total mass ratio of 25% by mass or more and 80% by mass or less,
the oil and fat component (a) containing the triglyceride ($a_3'$) in a mass ratio of 0.5% by mass or more and 5% by mass or less,
the mass ratio of the triglyceride ($a_1$) to the triglyceride ($a_2$) being 0.8 or more and 2.2 or less,
the mass ratio of the triglyceride ($a_1$) to the triglyceride ($a_3'$) being 3.8 or more,
the mass ratio of a palmitic acid residue to all the "saturated fatty acid residues with a carbon number of 16 or more and 22 or less" being 0.45 or more in the oil and fat component (a),
the oil and fat component (a) containing a solid fat in a mass ratio of 40% by mass or more at 10°C, 5% by mass or less at 35°C, and 1% by mass or less at 40°C.

2. The foamable oil-in-water emulsified oil and fat composition according to claim 1, wherein the oil and fat component (a) further contains an UUU triglyceride ($a_4$) having three unsaturated fatty acid residues, and the oil and fat component (a) contains the triglyceride ($a_4$) in a mass ratio of 4% by mass or more and 30% by mass or less.

3. The foamable oil-in-water emulsified oil and fat composition according to claim 1 or 2, wherein the oil phase (A) contains an oil and fat ($\alpha$) in an amount of 20% by mass or more and 100% by mass or less, and, in the oil and fat ($\alpha$), the whole oil and fat contain the triglyceride ($a_1$) in a mass ratio of 30% by mass or more and 55% by mass or less, the mass ratio of the triglyceride ($a_1$) to the triglyceride ($a_2$) is 0.8 or more and 2.2 or less, the mass ratio of the triglyceride ($a_1$) to the triglyceride ($a_3'$) is 5.0 or more, the mass ratio of the SSU triglyceride to the SUS triglyceride is 1.0 or more, and the mass ratio of a palmitic acid residue to all the saturated fatty acid residues with a carbon number of 16 or more and 22 or less is 0.65 or more.

4. The foamable oil-in-water emulsified oil and fat composition according to claim 3, wherein the oil phase (A) contains the oil and fat ($\alpha$) in an amount of 50% by mass or more and 80% by mass or less.

5. The foamable oil-in-water emulsified oil and fat composition according to claim 3 or 4, wherein the oil and fat ($\alpha$) is a fractionated liquid of an transesterified oil of a palm oil and fat and has an iodine value of 38 or more and 62 or less.

6. The foamable oil-in-water emulsified oil and fat composition according to claim 4 or 5, wherein the oil phase (A) further contains at least one oil and fat ($\beta$) of a lauric oil and fat and a milk fat in an amount of 20% by mass or more and 50% by mass or less.

7. The foamable oil-in-water emulsified oil and fat composition according to any one of claims 1 to 6, wherein the oil phase (A) is contained in a mass ratio of 20% by mass or more and 50% by mass or less, and an aqueous phase (B) is contained in a mass ratio of 50% by mass or more and 80% by mass or less.

8.  The foamable oil-in-water emulsified oil and fat composition according to claim 7, wherein the oil phase (A) contains the oil and fat component (a) in a mass ratio of 85% by mass or more and 100% by mass or less.

9.  A whipped cream produced by using the foamable oil-in-water emulsified oil and fat composition according to any one of claims 1 to 8.


**Patentansprüche**

1.  Schäumbare Öl-in-Wasser-Zusammensetzung mit emulgiertem Öl und Fett umfassend eine Ölphase (A), die einen Öl- und Fettbestandteil (a) enthält, wobei
    der Öl- und Fettbestandteil (a) mindestens ein S2U-Triglycerid $(a_1)$ mit zwei "gesättigten Fettsäureresten mit einer Kohlenstoffzahl von 16 oder mehr und 22 oder weniger" und einem "ungesättigten Fettsäurerest mit einer Kohlenstoffzahl von 16 oder mehr und 22 oder weniger", ein SU2-Triglycerid $(a_2)$ mit einem "gesättigten Fettsäurerest mit einer Kohlenstoffzahl von 16 oder mehr und 22 oder weniger" und zwei "ungesättigten Fettsäureresten mit einer Kohlenstoffzahl von 16 oder mehr und 22 oder weniger" und einem dreifach gesättigten Triglycerid $(a_3)$ mit drei gesättigten Fettsäureresten enthält,
    das Triglycerid $(a_1)$ aus einem SSU-Triglycerid mit den gesättigten Fettsäureresten an den 1- und 2-Positionen oder den 2- und 3-Positionen und aus einem SUS-Triglycerid mit den gesättigten Fettsäureresten an den 1- und 3-Positionen zusammengesetzt ist, wobei das Masseverhältnis von dem SSU-Triglycerid zu dem SUS-Triglycerid 1,0 oder mehr ist,
    das Triglycerid $(a_3)$ ein SSS-Triglycerid $(a_3')$ mit drei "gesättigten Fettsäureresten mit einer Kohlenstoffzahl von 16 oder mehr und 22 oder weniger" einschließt,
    der Öl- und Fettbestandteil (a) das Triglycerid $(a_1)$ in einem Masseverhältnis von 7 Masse-% oder mehr und 55 Masse-% oder weniger enthält,
    der Öl- und Fettbestandteil (a) das Triglycerid $(a_3)$ und das Triglycerid $(a_1)$ in einem Gesamtmasseverhältnis von 25 Masse-% oder mehr und 80 Masse-% oder weniger enthält,
    der Öl- und Fettbestandteil (a) das Triglycerid $(a_3')$ in einem Masseverhältnis von 0,5 Masse-% oder mehr und 5 Masse-% oder weniger enthält,
    das Masseverhältnis von dem Triglycerid $(a_1)$ zu dem Triglycerid $(a_2)$ 0,8 oder mehr und 2,2 oder weniger ist,
    das Masseverhältnis von dem Triglycerid $(a_1)$ zu dem Triglycerid $(a_3')$ 3,8 oder mehr ist,
    das Masseverhältnis von einem Palmitinsäurerest zu allen "gesättigten Fettsäureresten mit einer Kohlenstoffzahl von 16 oder mehr und 22 oder weniger" 0,45 oder mehr in dem Öl- und Fettbestandteil (a) ist,
    der Öl- und Fettbestandteil (a) ein festes Fett in einem Masseverhältnis von 40 Masse-% oder mehr bei 10 °C, 5 Masse-% oder weniger bei 35 °C, und 1 Masse-% oder weniger bei 40 °C enthält.

2.  Schäumbare Öl-in-Wasser-Zusammensetzung mit emulgiertem Öl und Fett nach Anspruch 1, wobei der Öl- und Fettbestandteil (a) weiterhin ein UUU-Triglycerid $(a_4)$ mit drei ungesättigten Fettsäureresten enthält und der Öl- und Fettbestandteil (a) das Triglycerid $(a_4)$ in einem Masseverhältnis von 4 Masse-% oder mehr und 30 Masse-% oder weniger enthält.

3.  Schäumbare Öl-in-Wasser-Zusammensetzung mit emulgiertem Öl und Fett nach Anspruch 1 oder 2, wobei die Ölphase (A) ein Öl und Fett $(\alpha)$ in einer Menge von 20 Masse-% oder mehr und 100 Masse-% oder weniger enthält, und in dem Öl und Fett $(\alpha)$ das gesamte Öl und Fett das Triglycerid $(a_1)$ in einem Masseverhältnis von 30 Masse-% oder mehr und 55 Masse-% oder weniger enthalten ist, wobei das Masseverhältnis von dem Triglycerid $(a_1)$ zu dem Triglycerid $(a_2)$ 0,8 oder mehr und 2,2 oder weniger ist, das Masseverhältnis von dem Triglycerid $(a_1)$ zu dem Triglycerid $(a_3')$ 5,0 oder mehr ist, wobei das Masseverhältnis von dem SSU-Triglycerid zu dem SUS-Triglycerid 1,0 oder mehr ist, und das Masseverhältnis von einem Palmitinsäurerest zu allen gesättigten Fettsäureresten mit einer Kohlenstoffzahl von 16 oder mehr und 22 oder weniger 0,65 oder mehr ist.

4.  Schäumbare Öl-in-Wasser-Zusammensetzung mit emulgiertem Öl und Fett nach Anspruch 3, wobei die Ölphase (A) das Öl und Fett $(\alpha)$ in einer Menge von 50 Masse-% oder mehr und 80 Masse-% oder weniger enthält.

5.  Schäumbare Öl-in-Wasser-Zusammensetzung mit emulgiertem Öl und Fett nach Anspruch 3 oder 4, wobei das Öl und Fett $(\alpha)$ eine fraktionierte Flüssigkeit eines umgeesterten Öls eines Palmöls- und -fettes ist und einen Jodwert von 38 oder mehr und 62 oder weniger aufweist.

6.  Schäumbare Öl-in-Wasser-Zusammensetzung mit emulgiertem Öl und Fett nach Anspruch 4 oder 5, wobei die Ölphase (A) weiterhin mindestens ein Öl und Fett (β) eines Laurinöls und -fettes und eines Milchfettes in einer Menge von 20 Masse-% oder mehr und 50 Masse-% oder weniger enthält.

7. Schäumbare Öl-in-Wasser-Zusammensetzung mit emulgiertem Öl und Fett nach einem der Ansprüche 1 bis 6, wobei die Ölphase (A) in einem Masseverhältnis von 20 Masse-% oder mehr und 50 Masse-% oder weniger enthalten ist und eine wässrige Phase (B) in einem Masseverhältnis von 50 Masse-% oder mehr und 80 Masse-% oder weniger enthalten ist.

8. Schäumbare Öl-in-Wasser-Zusammensetzung mit emulgiertem Öl und Fett nach Anspruch 7, wobei die Ölphase (A) der Öl- und Fettbestandteil (a) in einem Masseverhältnis von 85 Masse-% oder mehr und 100 Masse-% oder weniger enthält.

9. Schlagsahne, hergestellt durch Verwenden der schäumbaren Öl-in-Wasser-Zusammensetzung mit emulgiertem Öl und Fett nach einem der Ansprüche 1 bis 8.


**Revendications**

1. Composition d'huile et de graisse en émulsion huile-dans-eau pouvant mousser comprenant une phase huileuse (A) contenant un composant d'huile et de graisse (a),
le composant d'huile et de graisse (a) contenant au moins un triglycéride S2U ($a_1$) ayant deux « résidus d'acides gras saturés avec un nombre de carbone de 16 ou plus et 22 ou moins » et un « résidu d'acide gras insaturé avec un nombre de carbone de 16 ou plus et 22 ou moins », un triglycéride SU2 ($a_2$) ayant un « résidu d'acide gras saturé avec un nombre de carbone de 16 ou plus et 22 ou moins » et deux « résidus d'acides gras insaturés avec un nombre de carbone de 16 ou plus et 22 ou moins », et un triglycéride tri-saturé ($a_3$) ayant trois résidus d'acides gras saturés,
le triglycéride ($a_1$) étant composé d'un triglycéride SSU ayant les résidus d'acides gras saturés aux positions 1 et 2 ou aux positions 2 et 3 et d'un triglycéride SUS ayant les résidus d'acides gras saturés aux positions 1 et 3, le rapport massique du triglycéride SSU sur le triglycéride SUS étant 1,0 ou plus,
le triglycéride ($a_3$) incluant un triglycéride SSS ($a_3$') ayant trois « résidus d'acides gras saturés avec un nombre de carbone de 16 ou plus et 22 ou moins »,
le composant d'huile et de graisse (a) contenant le triglycéride ($a_1$) dans un rapport massique de 7 % en masse ou plus et 55 % en masse ou moins,
le composant d'huile et de graisse (a) contenant le triglycéride ($a_3$) et le triglycéride ($a_1$) dans un rapport massique total de 25 % en masse ou plus et 80 % en masse ou moins,
le composant d'huile et de graisse (a) contenant le triglycéride ($a_3$') dans un rapport massique de 0,5 % en masse ou plus et 5 % en masse ou moins,
le rapport massique du triglycéride ($a_1$) sur le triglycéride ($a_2$) étant 0,8 ou plus et 2,2 ou moins,
le rapport massique du triglycéride ($a_1$) sur le triglycéride ($a_3$') étant 3,8 ou plus,
le rapport massique d'un résidu d'acide palmitique sur tous les « résidus d'acides gras saturés avec un nombre de carbone de 16 ou plus et 22 ou moins » étant 0,45 ou plus dans le composant d'huile et de graisse (a),
le composant d'huile et de graisse (a) contenant une graisse solide dans un rapport massique de 40 % en masse ou plus à 10 °C, 5 % en masse ou moins à 35 °C, et 1 % en masse ou moins à 40 °C.

2. Composition d'huile et de graisse en émulsion huile-dans-eau pouvant mousser selon la revendication 1, dans laquelle le composant d'huile et de graisse (a) contient en outre un triglycéride UUU ($a_4$) ayant trois résidus d'acides gras insaturés, et le composant d'huile et de graisse (a) contient le triglycéride ($a_4$) dans un rapport massique de 4 % en masse ou plus et 30 % en masse ou moins.

3. Composition d'huile et de graisse en émulsion huile-dans-eau pouvant mousser selon la revendication 1 ou 2, dans laquelle la phase huileuse (A) contient une huile et une graisse (α) en une quantité de 20 % en masse ou plus et 100 % en masse ou moins, et, dans l'huile et la graisse (α), l'huile et la graisse entières contiennent le triglycéride ($a_1$) dans un rapport massique de 30 % en masse ou plus et 55 % en masse ou moins, le rapport massique du triglycéride ($a_1$) sur le triglycéride ($a_2$) est 0,8 ou plus et 2,2 ou moins, le rapport massique du triglycéride ($a_1$) sur le triglycéride ($a_3$') est 5,0 ou plus, le rapport massique du triglycéride SSU sur le triglycéride SUS est 1,0 ou plus, et le rapport massique d'un résidu d'acide palmitique sur tous les résidus d'acides gras saturés avec un nombre de carbone de 16 ou plus et 22 ou moins est 0,65 ou plus.

**4.** Composition d'huile et de graisse en émulsion huile-dans-eau pouvant mousser selon la revendication 3, dans laquelle la phase huileuse (A) contient l'huile et la graisse ($\alpha$) en une quantité de 50 % en masse ou plus et 80 % en masse ou moins.

**5.** Composition d'huile et de graisse en émulsion huile-dans-eau pouvant mousser selon la revendication 3 ou 4, dans laquelle l'huile et la graisse ($\alpha$) est un liquide fractionné d'une huile transestérifiée d'une huile et d'une graisse de palme et a un indice d'iode de 38 ou plus et 62 ou moins.

**6.** Composition d'huile et de graisse en émulsion huile-dans-eau pouvant mousser selon la revendication 4 ou 5, dans laquelle la phase huileuse (A) contient en outre au moins une huile et une graisse ($\beta$) d'une huile et d'une graisse lauriques et d'une graisse de lait en une quantité de 20 % en masse ou plus et 50 % en masse ou moins.

**7.** Composition d'huile et de graisse en émulsion huile-dans-eau pouvant mousser selon l'une quelconque des revendications 1 à 6, dans laquelle la phase huileuse (A) est contenue dans un rapport massique de 20 % en masse ou plus et 50 % en masse ou moins, et une phase aqueuse (B) est contenue dans un rapport massique de 50 % en masse ou plus et 80 % en masse ou moins.

**8.** Composition d'huile et de graisse en émulsion huile-dans-eau pouvant mousser selon la revendication 7, dans laquelle la phase huileuse (A) contient le composant d'huile et de graisse (a) dans un rapport massique de 85 % en masse ou plus et 100 % en masse ou moins.

**9.** Crème fouettée produite en utilisant la composition d'huile et de graisse en émulsion huile-dans-eau pouvant mousser selon l'une quelconque des revendications 1 à 8.

**EP 2 893 814 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008086268 A
- JP 2002017256 A
- JP 2006223176 A

**Non-patent literature cited in the description**

- *Journal of the American Oil Chemists' Society,* 1991, vol. 68, 289-293
- Standard Methods for the Analysis of Fats. Oils and Related Materials. Japan Oil Chemists' Society, 1996, vol. 3.3.3